# EUROPEAN PATENT APPLICATION

(11) **EP 1 231 008 A1**
(43) Date of publication of application: **14.08.2002**
(21) Application number: 01204352.7
(22) Date of filing: 13.11.2001
(51) Int. Cl.: B23D 47/04, B27B 5/065, B27B 31/06, B23Q 1/66, B23Q 7/04, B27M 1/08, B25B 11/00

(54) **Sheet tooling machine**

(30) Priority: 13.11.2000 BE 200000721
(71) Applicant: De Muynck, Gabriel, 8800 Roeselare-Beveren (BE)
(72) Inventor: De Muynck, Gabriel, 8800 Roeselare-Beveren (BE)
(74) Representative: Quintelier, Claude

(57) **Abstract**

Sheet tooling machine, comprising a setting station (B) provided with positioning means (21,22,24) for positioning the sheet (3) to be machined relative to a co-ordinates system of the machine tool, which sheet tooling machine further comprises a movable sheet-holding member (30,31,46,47), which sheet-holding member (30,31,46,47) comprises at least a first (30) and a second (46) sheet-holding element and is disposed in a machining station (C1,C2) which in the co-ordinates system connects to the setting station (B), and in which the first sheet-holding element (30) is disposed below and the second sheet-holding element (46) is disposed above a horizontal plane in which the sheet (3) extends, which first (31) and second (46) sheet-holding elements are in each case fitted on a conveyor element for moving the sheet-holding elements (30,31,46,47) in a horizontal direction along a first and second path, which paths at least partially overlap, and in which the positioning means (21,22,24) are fitted on a further conveyor element, which is equipped to clamp down the sheet (3) after it has been positioned and to transfer it to the machining station (C1,C2) and deliver it there to the sheet-holding member (30,31,46,47).

## Description

The invention relates to a sheet tooling machine, in particular for machining MDF sheets, comprising a setting station provided with positioning means for positioning the sheet to be machined relative to a co-ordinates system of the machine, which sheet tooling machine further comprises a movable sheet-holding member for retaining the sheet during the machining, which sheet-holding member comprises at least a first and a second sheet-holding element.

Such a sheet tooling machine is known from EP-A-0,830,922. In the case of the known machine the sheet to be machined is taken to the setting station, where it is positioned in the co-ordinates system of the machine. Once positioned, the sheet is held fast by the sheet-holding member at the place where it was positioned, so that the sheet can be machined there. After machining, the sheet is taken to a removal station.

A drawback of the known sheet tooling machine is that the setting and sawing of the sheet are carried out at the same place. For further machining, the sheet has to be sent to another station, where it again has to be positioned in another co-ordinates system. On the one hand, this limits the speed at which the sheet can be machined and, on the other hand, repositioning can lead to mistakes.

The object of the invention is to achieve a sheet tooling machine in the case of which repositioning is not necessary and a higher throughput speed of sheet machining becomes possible.

To that end, a sheet tooling machine according to the invention is characterised in that the sheet-holding member is disposed in a machining station which in the co-ordinates system follows the setting station, and in that the first sheet-holding element is disposed below and the second sheet-holding element is disposed above a horizontal plane in which the sheet extends, which first and second sheet-holding elements are each time fitted on a conveyor element for moving the sheet-holding elements in a horizontal direction along a first and second path, which paths at least partially overlap, and in that the positioning means are fitted on a further conveyor element, which is provided in order to clamp down the sheet after it has been positioned and to transfer it to the machining station and pass it over there to the sheet-holding member. Owing to the presence of the machining station which follows the setting station, the machining is no longer carried out in the setting station, but in the machining station. Since the machining station is provided in the co-ordinates system of the machine, once the sheet is positioned it remains in the same co-ordinates system, with the result that repositioning in another co-ordinates system is no longer necessary. Moreover, owing to the fact that the first and second sheet-holding elements are disposed above and below the sheet and the paths along which they are movable partially overlap, the one sheet-holding element can take over the sheet from the other sheet-holding element without the positioning in the co-ordinates system changing. This means that the sheet can be machined on all six of its sides without repositioning, with the result that the machining time is shortened. The transfer of the sheet from the setting station to said machining station means that the setting station is cleared during the machining and the next sheet can already be positioned while the one before is being machined.

A first preferred embodiment of a sheet tooling machine according to the invention is characterised in that the first and second sheet-holding elements each comprise a series of suction cups, the suction cups of the same series being movable up and down at least in groups. Suction cups make it possible to retain the sheet without damaging it. The further measure of moving the suction cups up and down at least in groups makes it possible to machine the sides of a sawn sheet part without moving the sheets in the horizontal direction. The fact is that moving the sheet parts up and down in this way makes it possible to lift one sheet part, with the result that the side of the adjacent sheet part becomes accessible for a tool, which can then machine that side.

It is advantageous for the conveyor element of one of the sheet-holding elements to be equipped for conveying the sheet-holding element into a removal station which follows the machining station. This means that the sheet-holding element also acts as a conveyor means to the removal station.

A second embodiment of a sheet tooling machine according to the invention is characterised in that a motor-driven saw is provided in the setting station, which saw is connected to the positioning means and is equipped for sawing down said sheet to a predetermined dimension after it has been positioned. This means that the sheet cannot be sawn to size until after it has been positioned, which produces greater accuracy.

It is advantageous for at least some of the sheet machining tools be mounted on a tilting element, so that said sheet machining tools can be made to tilt about their axis. Making the tools tilt means that one and the same tool can be used to machine the sides and top or bottom of the sheet.

The invention will now be described in greater detail with reference to an exemplary embodiment shown in the drawing.

In the drawing :
Figure 1 shows a top view of a sheet tooling machine according to the invention;
Figure 2 shows an exemplary embodiment of the sheet machining tools as part of the sheet tooling machine; and
Figures 3 and 4 show a side view of the machining station as part of the sheet tooling machine.

In the drawing an identical reference numeral is given to an identical or similar element.

The sheet tooling machine according to the invention is in particular equipped for machining coated or uncoated MDF (medium-density fibreboard) sheets. It will be clear, however, that the sheet tooling machine according to the invention is also suitable for machining other sheets such as wood, glass, coated or uncoated plastic sheets, chipboard sheets or steel sheets. Of course, the sheet machining tools will have to be adapted to the type of material (wood, glass, plastic or steel) that is to be machined. For the sake of clarity, only a machine for machining sheets of wood will be referred to in the remainder of the description.

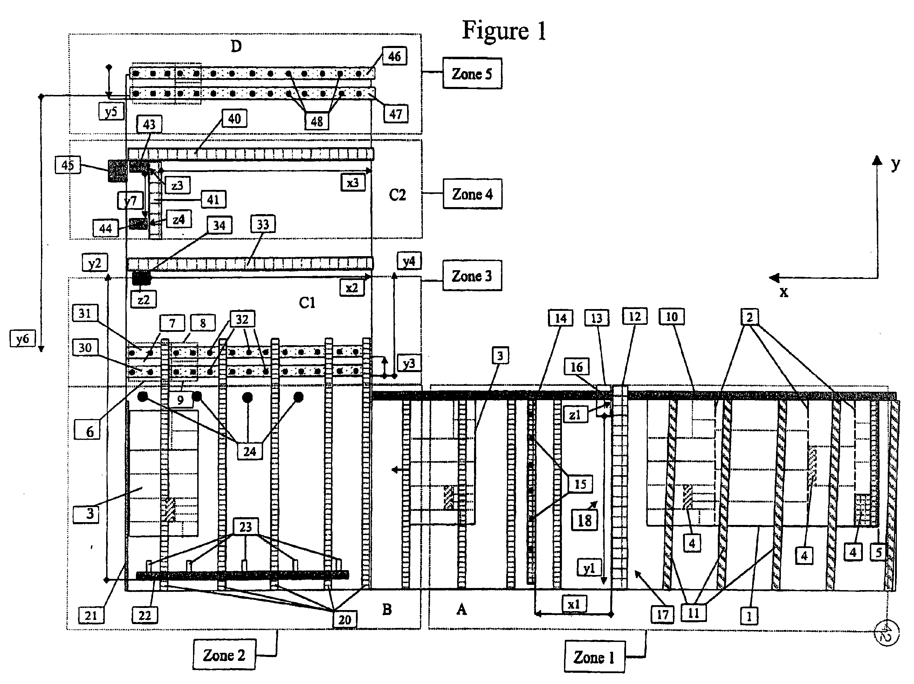

The sheet tooling machine according to the invention, an exemplary embodiment of which is shown in Figure 1, comprises substantially four successive stations, namely a supply station A, a setting station B, a machining station C1 and C2, and a removal station D. The successive stations are provided in successive zones 1 to 5 inclusive, the machining station extending over two zones, zone 3 and zone 4. In the figure the zones are disposed in an L-shape, in order to limit the overall length of the machine, but it will be clear that this is not necessary, and that other arrangements such as a linear arrangement are also possible.

The supply station A disposed in zone 1 is equipped for supplying the basic sheets 1 from a store. To that end, the supply station comprises a series of oblique rollers 11, provided in a preferably horizontally arranged plane. The rollers are preferably motor-driven, for example by means of a motor and a chain mechanism (not shown in the figure). The rollers 11 align and position the basic sheet 1, on the one hand, against a fixed stop guide 10, which provides an alignment in the X direction, and, on the other hand, a movable stop bar 14 provided with a stop lath 15, which provides an alignment in the Y direction. In the plane above the rollers 11 there is a movable (preferably motor-driven) portal 12, provided with a preliminary cross-cut saw unit B, which preferably comprises an electrically driven saw 16.

The various elements and tools of the sheet tooling machine are preferably controlled by electronic control means (not shown in the figure). Said control means preferably comprise a microprocessor and also a memory. The operations to be carried out are programmable in a manner known per se.

When zone 2 is ready to receive a new piece of board, the stop bar 14 is first set by means of the electronic control means at the desired distance from the cross-cut saw 16. Said stop bar 14 is provided with hydraulically or pneumatically driven cylinders, which can adjust the stop lath 15 vertically, and in the lowest position of the stop lath can block the passage of the basic sheet 1, or the remaining part of said basic sheet, at the desired size. It must be pointed out here that said first cutting-off operation is optional. The obliquely positioned drive rollers 11 convey the basic sheet 1 until it is against the stop lath of the stop system 15. If desired, a first cutting-off operation can then start. This operation achieves a first cut 2 in the basic sheet. In this case the basic sheet 1 is clamped over its entire width at the level of the cut 2 by double clamping bars 18 fixed on the portal structure. The preliminary cross-cut saw unit 13, which is mounted on the portal structure 12 and comprises the saw 16, is adjusted in the z1 direction (direction perpendicular to the plane of the drawing), so that the saw 16 goes to the appropriate height to cut through the basic sheet 1. By means of y1 movement, the cut 2 is made. After this, the preliminary cross-cut saw unit 13 is brought back up in the z1 direction and returns to its initial position. The double clamping bars 18 and the stop bar 14, by a vertical adjustment of the stops 15, then unblock the passage for the sawn-off sheet 3, and the rollers 20 convey the part to zone 2, in the x direction the piece being intercepted by a stop 21, which forms part of the positioning means of the setting station B. The remaining wood 5, left as a result of the splitting up of the front or rear side of the sheet 3, is discharged by way of an ejection unit 17.

After a sheet 3 has been cut from the basic sheet 1, said sheet is taken by means of slide-off rollers 20 to the setting station. The latter comprises positioning means, which comprise the x stop 21 and also the clamping bar 22 and the y stops 24. The x stop 21 is in a fixed position, while the y stops 24 are preferably formed by pins going up and down in the z direction. In this way the y stops can move in and out of the plane in which the sheet is disposed. The clamping bar 22 has a series of clamps 23 and is movable in the y direction. For this purpose, it is fitted on a conveyor element, for example formed by a chain or a gearwheel and a motor. The clamping bar is preferably provided with a detector, for example a light detector which detects the presence of the sawn-off sheet 3 and thus sends a signal to the electronic control means that a sheet 3 has arrived.

When the sawn-off sheet 3 has arrived in the setting station, it is conveyed until it goes against the x stop 21, in order to start the positioning. During this operation the y stops (24) are adjusted in height, in order to block the passage of the sheet 3 to be split up. The clamping bar 22 moves with open clamps 23 in the y2 direction and in the process pushes the sheet 3 until it is against the stops 24, after which the clamps 23 close. When the sheet 3 is resting against the x and y stops 21 and 24 and the clamps 23 are closed, the sheet is positioned in the optimum manner in the co-ordinates system of the sheet tooling machine. The fact is that these stops and the clamping bar determine the origin of this co-ordinates system, in which all further operations will be carried out.

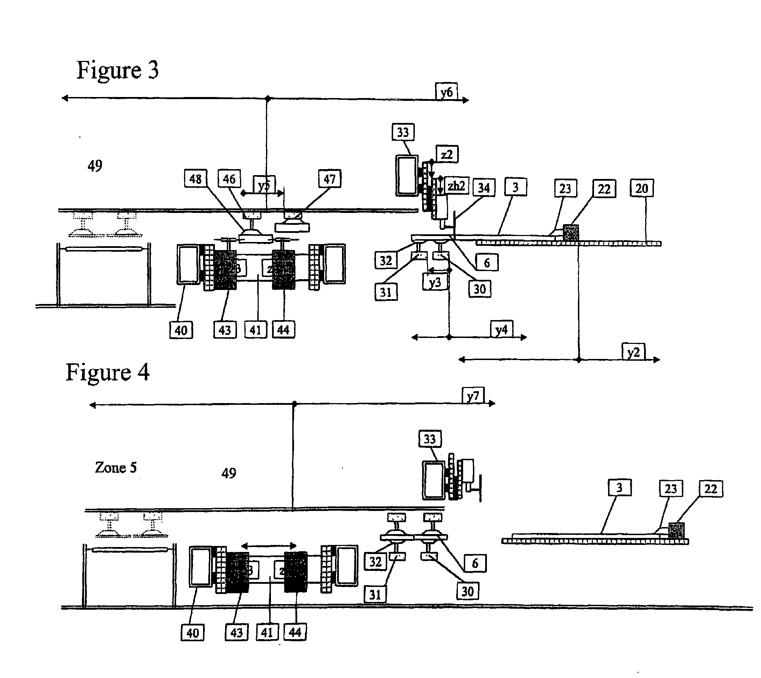

After the closure of the clamps 23, the stops 24 are retracted, in order to permit the passage of the sheet 3 to the machining station. The clamping bar 22 moves the sheet to the machining station and positions said sheet relative to a movable sheet-holding member 30, 31, 46, 47, which forms part of the machining station. The sheet-holding member comprises at least a first sheet-holding element 30 and a second sheet-holding element, the first being provided below and the second above the horizontal plane in which the sheet 3 extends (see Figures 3 and 4). Four sheet-holding elements are shown in the drawing, two below (30, 31) and two above (46, 47). The presence of four sheet-holding elements has the advantage that a greater freedom of movement is thereby created, which benefits the speed of the machining operation. Since each of the sheet-holding elements is fitted on a conveyor element, for example in the form of a linear motor which makes each element move in the y direction along a track (49, 50), the sheet-holding member serves not only to retain the sheet 3, but also to move the sheet in the machining station and even to the removal station D. Each movement is within the co-ordinates system of the machine, because the sheet-holding member is disposed in said machine. The first sheet-holding elements 30, 31 and second sheet-holding elements 46, 47 further move in such a way that their paths at least partially overlap.

Each sheet-holding element 30, 31, 46 and 47 comprises a series of suction cups 32, 48, the suction cups of the same series being movable up and down (in the z direction) at least in groups. The suction cups retain the sheets by suction, by creating a vacuum. Adjacent sheets can be adjusted in height relative to each other by making the suction cup move up and down. The suction cups can also be movable up and down individually, but they must be movable up and down at least in groups of, for example, two or four adjacent suction cups.

Motor-driven sheet machining tools 43, 44 such as drills, saws, cutters etc. are provided in the machining station. Said tools are fitted on a carriage 41, which can be moved along the frame 40 of the machine in the x direction. Furthermore, said tools can also be moved in the z and y direction, so that three-dimensional movement in the co-ordinates system of the machine is possible. Finally, the tools, or at least some of them, are mounted on a tilting element, so that they can tilt about their axis.

After positioning, the sheet 3 is taken to the machining station C1 by the clamping bar 22, and is transferred there to the sheet-holding elements 30 and 31. These sheet-holding elements 30 and 31 can be freely positioned in the y direction (y3 and y4). The distance between them is determined on the basis of the width of the workpieces and also by the possible machining operations to be carried out. After the sheet has been taken above and/or below the sheet-holding elements, the desired suction cups in their top position retain the sheet 3 by suction. From this moment onwards, the suction bars 30 and 31 and the clamping bar 22 move as one unit and position the sheet 3 below the machining unit 34, as shown in Figure 1.

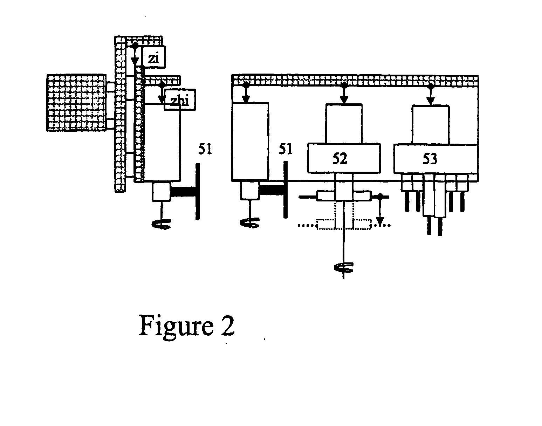

For the sake of clarity, a global description of tools 34, 43 and 44 will be given first. Figure 2 shows a possible configuration of the tools and shows a saw unit, in which the saw blade 51 can be adjusted about a vertical axis. A unit 52 for horizontal drilling operations and a unit 53 for vertical drilling operations are also shown. It should be pointed out that the unit for horizontal drilling operations can be tilted about a vertical axis. The configuration of Figure 2 is intended only as an example, and other configurations are also possible. For instance, the tool 43 comprises a cutter motor, which can exchange cutting tools fully automatically with a tool magazine 45. The tools inside the same machining station have a common computer-controlled height adjustment zi. In addition, each tool can have its own height adjustment zhi. This secondary adjustment zhi serves to present one specific tool to the sheet and in this way ensures that the other "retracted" tools do not interfere with the sheet or other tools. Both the horizontal and the vertical drilling units use the same technique for presenting one or more specific drills to the sheet.

After positioning of the sheet 3 to be split up in the machining station, a sub-sheet 6 is sawn off the sheet 3, as shown in Figure 3. Thereafter, the clamping bar withdraws to a waiting position with the remaining part of the sheet (3). The outside contour of the sub-sheet 6 is then machined further with the aid of the saw unit of machining unit 34. Further splitting up of sub-sheet 6 is then carried out. In the example of Figure 1 the sheet 6 is split up into three sheet parts (7, 8 and 9). Since the sheet is transferred by way of the clamping bar to the sheet-holding member, which also moves in the co-ordinates system of the machine, repositioning is not necessary.

The following technique is used to produce the inside saw cut in the x direction. The outside contour cut and the cuts in the y direction are made first. The suction cups retaining the sheet 7 are then retracted, after which the splitting saw can separate sheet part 8 from sheet part 9. The suction cups retaining sheet part 7 are then extended again, and the machining unit 34 starts to carry out the desired machining operations in the top surface of the sheet parts 7, 8 and 9. All this is possible because the suction cups can be moved up and down at least in groups.

When these machining operations have been completed, all tools of the machining unit 34 are retracted in order to allow the passage of lower sheet-holding elements 30 and 31. This situation is illustrated by Figure 4. The upper sheet-holding elements 46 and 47 position themselves above the lower sheet-holding elements 30 and 31. This is possible because the first path of the sheet-holding elements 30, 31 and the second path of the sheet-holding elements 46, 47 at least partially overlap. The desired suction cups 48 of the upper sheet-holding elements 46 and 47 are extended and the desired number of sheet parts is taken over by the upper sheet-holding elements 46 and 47. It should be pointed out here that not necessarily all sheet parts have to be taken up by the upper sheet-holding elements 46 and 47. In some cases the sheet parts are taken over in several stages, it being made possible for the lower sheet-holding elements 30 and 31 to reposition relative to each other around the sheet parts without the latter being released by at least some of the suction cups. In this scenario, for example, the suction effect of the individual active suction cups 32 of, for example, 1 lower sheet-holding element 30 is switched off, while the sheet parts continue to be retained by the suction of other suction cups of the lower sheet-holding element 31. The sheet-holding element 31 repositions itself and switches the suction action of the desired suction cups 32 back on. This is only one of the possible scenarios.

After taking over the sheet parts, the upper sheet-holding elements 46 and 47 present the sheet parts to the machining units 43 and 44. Machining unit 44 is adjustable in the y7 direction relative to machining unit 43. Figure 3 illustrates a complex form of interaction of these machining units 43 and 44 and the upper sheet-holding elements 46 and 47, with simultaneous drilling of horizontal holes in sheet part 8. In this case sheet part 9 is retracted in order to allow access of the drilling units of machining units 43 and 44 to all sides of sheet part 8. In zone 4 the five remaining sides of all sheet parts can therefore be machined completely.

When the sheet parts have been machined completely, the upper sheet-holding elements 46 and 47 take the sheet parts to zone 5, where the sheet parts are removed onto, for example, a roller track.

The sheet tooling machine according to the invention therefore makes it possible to carry out successive machining operations sequentially without the sheet or sheet parts having to be repositioned. Since both the tools and the sheet-holding member are movable in the same co-ordinates system of the machine, the work is carried out in one and the same co-ordinates system, once the sheet has been positioned. Machining on all six sides of the sheet is possible through the fact that the suction cups can be moved up and down individually or at least in groups.

Since all machining operations are carried out in a successive order, it is also possible to cut the basic sheet in the optimum manner, so that the material loss is minimal.

## Claims

1. Sheet tooling machine, in particular for machining MDF sheets, comprising a setting station provided with positioning means for positioning the sheet to be machined relative to a co-ordinates system of the machine, which sheet tooling machine further comprises a movable sheet-holding member for retaining the sheet during the machining, which sheet-holding member comprises at least a first and a second sheet-holding element, **characterised in that** the sheet-holding member is disposed in a machining station which in the co-ordinates system follows the setting station, and **in that** the first sheet-holding element is disposed below and the second sheet-holding element is disposed above a horizontal plane in which the sheet extends, which first and second sheet-holding elements are each time fitted on a conveyor element for moving the sheet-holding elements in a horizontal direction along a first and second path, which paths at least partially overlap, and **in that** the positioning means are fitted on a further conveyor element, which is provided in order to clamp down the sheet after it has been positioned and to transfer it to the machining station and deliver it there to the sheet-holding member.

2. Sheet tooling machine according to Claim 1, **characterised in that** the first and second sheet-holding elements each comprise a series of suction cups, the suction cups of the same series being movable up and down at least in groups.

3. Sheet tooling machine according to Claim 1 or 2, **characterised in that** the conveyor element of one of the sheet-holding elements is equipped for conveying the sheet-holding element into a removal station which follows the machining station.

4. Sheet tooling machine according to any one of the Claims 1 to 3, **characterised in that** the positioning means comprise stops that are movable in and out of the plane in which the sheet is disposed.

5. Sheet tooling machine according to any one of the Claims 1 to 4,
**characterised in that** a motor-driven saw is provided in the setting station, which saw is connected to the positioning means and is equipped for sawing off the sheet to a predetermined dimension after it has been positioned.

6. Sheet tooling machine according to any one of the Claims 1 to 5, **characterised in that** motor-driven sheet-machining tools that are movable three-dimensionally are provided in the machining station.

7. Sheet tooling machine according to Claim 6, **characterised in that** at least some of the sheet-machining tools are mounted on a tilting element, so that said sheet-machining tools can be tilted about their axis.

8. Sheet tooling machine according to Claim 7 or 8, **characterised in that** the sheet machining tools are fitted on a carriage.
